# EUROPEAN PATENT SPECIFICATION

(11) **EP 3 722 650 B1**
(45) Date of publication and mention of the grant of the patent: **25.01.2023**
(21) Application number: 20161228.0
(22) Date of filing: 05.03.2020
(51) Int. Cl.: F16L 55/00, F16L 41/00, G01M 3/28, E03B 7/07, E03B 7/04, F17D 5/02, F16L 13/14

(54) **A LEAK DETECTOR AND A METHOD OF INSTALLING A LEAK DETECTOR**
EIN LECKDETEKTOR UND EIN VERFAHREN FÜR DIE INSTALLATION EINES LECKDETEKTORS
UN DÉTECTEUR DE FUITE ET UN PROCÉDÉ D'INSTALLATION D'UN DÉTECTEUR DE FUITE

(30) Priority: 08.03.2019 FI 20195171
(43) Date of publication of application: 14.10.2020
(73) Proprietor: Silotek Oy, 01730 Vantaa (FI)
(72) Inventor: HARNIO, Aku, 01730 Vantaa (FI)
(74) Representative: Laine IP Oy

(56) References cited:
- EP-A1- 3 153 758
- FR-A1- 2 797 648
- US-B1- 7 686 346
- Ville Varonen: "Luja-hormielementin asennusohjeet", opinnaytetyo, Rakennustekniikan koulutusohjelma, Talonrakennustuotanto, 7 May 2010 (2010-05-07), XP055683019, Retrieved from the Internet: URL:https://www.theseus.fi/bitstream/handl e/10024/13998/Varonen_Ville.pdf?sequence=1 &isAllowed=y [retrieved on 2020-04-06]

## Description

### TECHNICAL FIELD

The present invention relates to building technology. Specifically the invention relates to a leak detector for liquid pipe systems, in practice water pipe systems. In more detail the invention relates to a method for installing the leak detector.

### BACKGROUND

Leak detectors are needed in the water pipe systems of buildings for detecting leaks. The amount and location of leak detectors are described in building regulations. Pipes installed inside the wall structure require a leak detector, and usually leak detectors are provided in each floor of the building. The leak detector can be based on measuring the pressure changes of the pipeline and analysing them or a collecting cup can be installed around the pipes of vertical pipelines, into which water leaking from a possible leak point above the cup is collected. From the cup the water is directed to a suitable detector. The advantages of cup-type detectors are their inexpensive price and reliable, almost maintenance-free operation. Cleaning the apparatus and leak testing will be the only necessary maintenance. Pressure indicators are more expensive to acquire and their electronics and sensor technology is more fragile. In addition to water, both detector types can be used for other liquids as well, if the materials of the detectors are suitable for the liquid.

Cup-type leakage detectors are fastened around the vertical pipes of the pipe system. One model comprises a funnel-like cup and a pipe extending from its bottom. Usually this model is made of plastic and it is fastened on a vertical pipe by means of a hose clamp arranged around the bottom pipe. In another model the detector is made of two halves, arranged on both sides of the vertical pipe and pressed together with a snap locking. The connection between the vertical pipe and the leakage detector is sealed by means of glue and sealing tape. There are also variants of this model that can be installed around the T-branches of pipes. Both installation methods require care to achieve a leak-free connection. These detectors are made of plastic. If the pipe system of the building is made of another material, such as copper, or such is required, the leakage detectors must be made of the same material. A connection with a hose clamp can be used for a copper structure, but due to the higher strength of copper a leak-free connection can't be guaranteed. It is not possible to manufacture a two-part detector to fit around the pipe with reasonable costs.

Leak detectors and tube fittings have been described in US 7 686 346 B1 (BUCCICONE OANA F [US] ET AL) 30 March 2010 (2010-03-30), Ville Varonen: "Luja-hormielementin asennusohjeet", opinnäytetyö, Rakennustekniikan koulutusohjelma, Talonrakennustuotanto, 7 May 2010 (2010-05-07), XP055683019,Retrieved from the Internet: URL:https://www.theseus.fi/bitstream/handle/10024/13998/Varonen_Ville.pdf?sequence= 1&isAllowed=y, [retrieved on 2020-04-06], FR 2 797 648 A1 (M B M C L M [FR]) 23 February 2001 (2001-02-23), EP 3 153 758 A1 (FUEL STORAGE SOLUTIONS LTO [GB]) 12 April 2017 (2017-04-12).

Document US 7,686,346 B1 discloses a transition tee coupling having press-connect fittings on the ends and a push-connect fitting on the outlet. The improved transition tee coupling is formed using a reduced-outlet tee having press-connect fittings on all three sockets. An unfinished end of a tailpiece having a push-connect fitting on the opposite end is inserted into the outlet socket of the press-connect tee. The press-connect fitting of the outlet tee is crimped using a special press tool jaw that does not damage the push fitting on the tailpiece.

### SUMMARY

The purpose of this invention is to provide a new cup-type leak detector made of copper and a method for installing it. A leak detector according to claim 1 is provided.

The various embodiments of the invention provide e.g. easy installation, leak-free and durable connection around the vertical pipe and a simple construction.

In a method for installing a leak detector according to the invention, a leak detector made of copper and comprising a cup having an edge and an indentation tapering from the edge towards the centreline of the leak detector is pushed around the vertical pipe of a pipe line, with a connection conduit in the end opposite the edge of the indentation through which the vertical pipe can be arranged and having a crimping point provided with a sealing member and the leak detector is crimped onto the vertical pipe at the location of the sealing member.

According to another embodiment the sealing member is an O-ring and the leak detector is crimped onto the vertical pipe at the location of the O-ring.

According to an embodiment of the invention the crimping point is dimensioned for an M crimping jaw and the crimping is made by means of an M jaw.

The leak detector comprises a cup having an edge and an indentation tapering from the edge towards the centreline of the leak detector, with a connection conduit in the end opposite the edge of the indentation through which the pipe can be arranged and the connection conduit being provided with a crimping point having a sealing member, the connection conduit being made of copper.

According to an embodiment of the invention the sealing member is an O ring.

According to an embodiment of the invention the crimping point is dimensioned for an M crimping jaw.

According to an embodiment of the invention the cup has an outlet conduit located at a distance from the bottom of the cup.

According to an embodiment of the invention the outlet conduit is formed into the collar shaped from the material of the cup.

According to an embodiment of the invention the outlet conduit comprises a collar shaped from the material of the cup and a pipe soldered thereto.

### BRIEF DESCRIPTION OF DRAWINGS

In the following, some embodiments of the invention are disclosed in more detail by means of reference to the appended drawings, in which:
- FIGURE 1: is a perspective view of a leak detector according to at least one embodiment,
- FIGURE 2: is the leak detector of figure 1 seen from the side,

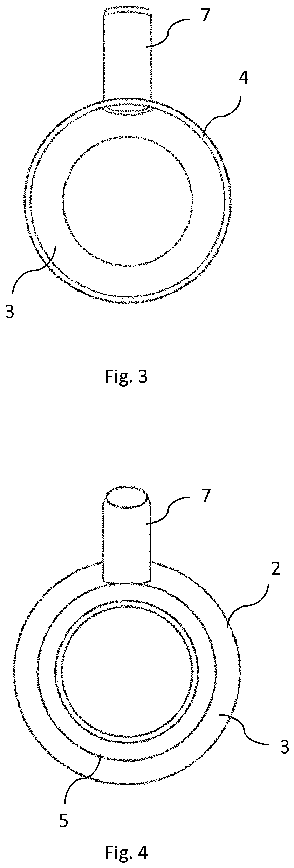

- FIGURE 3: is the leak detector of figure 1 seen from above,
- FIGURE 4: is the leak detector of figure 1 seen from below,
- FIGURE 5: is a perspective view of a leak detector according to at least one other embodiment, and
- FIGURE 6: is the leak detector of figure 5 seen from the side,

### EMBODIMENTS

### DEFINITIONS

In this context the term "copper" covers the copper materials and alloys, used for construction of pipe systems for liquids.

The leak detector according to the invention is intended for use with vertically installed pipelines. Thus, the term "up" means the direction of entry of water flowing under gravity and the term "down" or "lower" means the outlet direction of water.

The purpose of this invention is to provide a new cup-type leak detector made of copper and a method of installing it in pipelines. The leak detector operates so that a cup is arranged around the vertical line of the pipeline, the lower end of which is sealed around the vertical pipe. If a leak occurs in the pipeline above the leak detector, the leaking liquid, usually water, flows into the cup of the leak detector whereby the leak can be detected. Usually the liquid is directed from the cup with a hose via the conduit to a detector and alarm apparatus informing about the leak. In a solution according to the invention the leak detector is attached by means of a crimp connection around the vertical pipe. One advantageous connection method is an M crimp connection, in which a connection part of specified length is crimped on a pipe passing therethrough by means of crimping jaws. An O-ring is used as the seal for such a crimp connection. A crimp connection made by means of M jaws is fast and easy to achieve and will provide reliable seal.

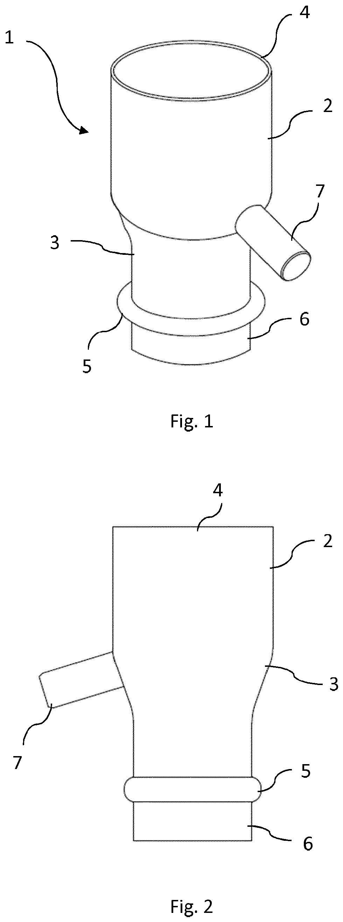

FIGURE 1 illustrates a leak detector comprising a cup part 1 consisting of a cylinder 2 and a reducer cone 3 connected thereto. The cylinder 2 of the cup part 1 has a first edge 4, the cylinder 2 extending therefrom forming an indentation tapering towards the centreline of the leak detector together with the reducer cone 3 extending from the other edge of the cylinder 2. The cylinder 2 is dimensioned so that its diameter is larger than the pipe size for which the leak detector is meant. The reducer cone 3 reduces the diameter of the cylinder 2 to correspond with the outer dimension of the pipe so that the reducer cone can be slid over the pipe to the desired place. The volume of the cup formed by the cylinder 2 does not have to be large, as its purpose is not to collect a large amount of leakage water, but to direct the leakage water for detection. Preferably the external dimensions of the leakage detector are small so that it will fit narrow spaces as well.

The reducer cone 3 terminates at a cylindrical connection conduit 6. The connection conduit 6 comprises an O-ring groove 5, with an O-ring therein between the reducer cone 3 and the end of the connection conduit 6. The O-ring groove 5 is visible as a bellows running around the connection conduit 6. In this example the connection conduit 6 and the O-ring groove 5 is dimensioned to fit a standard-sized M type crimp connector. Thus the leak detector can be attached to the pipe by crimping it onto the pipe by means of a crimping tool provided with M jaw. M-type pipe connectors are commonly used connectors and they are available for pipes of different sizes. Thus plumbing contractors have at their disposal the necessary tools for making the connection. The copper parts of the crimp connection already provide a tight fit, but final sealing is secured by means of an O-ring.

The crimp connection is effected by means of a crimping tool, the jaws of which fasten the connector and pipe mechanically to each other. The seal inside the connector is not deformed during crimping. Forces exerted later on the connection, such as those caused by thermal expansion, are directed on metal-metal surfaces and do not stress the seal. The method is very simple and fast. The end result is complete in one go and will be tidy in appearance. Crimp connection is a practical solution in e.g. fire hazardous renovation sites where hot work performed with open flame is not preferred. Crimping jaws and connectors that fit them are available in different dimensions and producers use letter identifiers for them. In addition to M jaws e.g. V, TH, U and RF jaws are available, and they can be used with a corresponding connector dimensioning in this invention instead of an M jaw and a corresponding connector dimensioning.

The liquid accumulating in the leak detector can be visually noticed directly at the cup of the detector or detected by means of a sensor, but usually the liquid is directed to a separate detector. For this purpose the leak detector is provided with an outlet conduit 7. The outlet conduit 7 is located at a distance from the bottom of the leak detector, the bottom being formed by the joining spot of the reducer cone 3 and the pipe running therethrough. Thus the condensation water flowing into the leak detector remains in the detector and evaporates therefrom without triggering an alarm. This also reduces the possibility of dirt blocking the detector. The outlet conduit 7 extends downward from the leak detector. A suitable outlet hose can be attached thereto for directing any leakage liquid (water) into a desired location.

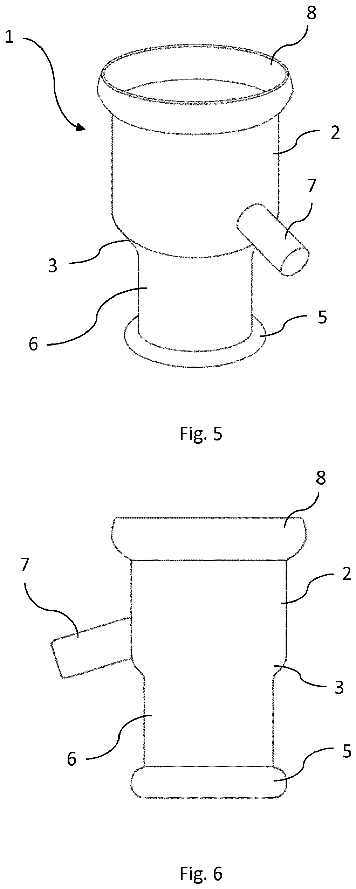

FIGURES 5 and 6 show a leak detector differing slightly from the one described above. The detector comprises a collar 8 located at the upper edge of the cup part 1 and extending in an angle upwards from the edge of the cylinder 2. The collar facilitates collecting the liquid and a protection lid can easily be installed over it. In this leak detector the groove the for the O-ring is located at the extreme end of the connection conduit 6.

The leak detector can be made from a copper pipe blank by means of machining with forming methods. It can naturally be contemplated that the various parts of the leak detectors are manufactured separately and connected to each other by e.g. soldering, However, increasing the amount of parts and connections also increases the cost of manufacturing. Preferably the outlet conduit is attached to the leak detector by means of a collar connection. The leak detector can be provided with a collar by forming the collar from the material of the leak detector around the hole of the outlet conduit. The collar can also be formed at the end of the pipe forming the outlet conduit, but installing it tightly on a rotationally symmetrical piece can be difficult. Most preferably, the connection between the outlet conduit and the leak detector is sealed by means of soldering. At the end of the manufacturing an O-ring is arranged into the O-ring groove.

The leak detector is installed by threading the leak detector over the vertical pipe of the line and then pushing the detector to the specified location. When the leak detector is in its place, it is crimped to contact the vertical pipe by crimping the connection conduit 6 around the O-ring groove, whereby the material of the outlet conduit is deformed and forms a tight connection around the vertical pipe together with the O-ring in the O-ring groove. It is advantageous to dimension the connection to fit the M connector and crimping jaw, because parts and tools are readily available for them.

In addition to the above some alternative embodiments and structures can be considered. They can be combined together. The shape of the cup part is not limited to the cylinder described above, it can be a cone, pyramid or a multi-faceted prism. Its diameter along its length can vary and it is generally sufficient that the chosen shape forms a collection cup. However, as the leak detector is designed to be arranged around a circular pipe, rotationally symmetrical forms are the most preferred ones and easy to manufacture. It is conceivable to use other crimp connection and sealing types besides an M connector and O-ring,

### INDUSTRIAL APPLICABILITY

The invention can be used for manufacturing and installing leak detectors and for installing pipelines.

### LIST OF REFERENCE NUMBERS

- 1: Cup part
- 2: Cylinder
- 3: Reducer cone
- 4: Edge
- 5: O-ring groove
- 6: Connection conduit
- 7: Outlet conduit
- 8: Collar

## Claims

1. A leak detector for use with vertically installed pipelines, comprising a cup part (1) to be arranged around the vertical line of a pipeline, the cup part (1) comprising a cylinder (2) and a reducer cone (3) connected thereto, wherein the cylinder (2) of the cup part (1) has a first upper edge (4), the cylinder (2) extending therefrom forming an indentation tapering towards the centreline of the leak detector together with the reducer cone (3) extending from the other edge of the cylinder (2), the end of the indentation opposite the first upper edge (4) being provided with a connection conduit (6) through which a vertical pipe can be arranged,
wherein
- the connection conduit (6) is provided with a crimping point (5) having a sealing member and at least the cup part (1) and the connection conduit (6) are made of copper, and
- the leak detector comprises an outlet conduit (7) located at a distance from the bottom of the leak detector, the bottom being formed by the joining spot of the reducer cone (3) and the vertical pipe running therethrough, the outlet conduit (7) extending downward in direction of outlet direction of water flowing under gravity.

2. A leak detector according to claim 1, **characterized in that** the sealing member is an O-ring.

3. A leak detector according to claim 1 or 2, **characterized in that** the crimping point is dimensioned for an M crimping jaw.

4. A leak detector according to any of claims 1 to 3, **characterized in that** the outlet conduit (7) is located at the cup part (2, 3) and located at a distance from the bottom of the cup part.

5. A leak detector according to claim 4, **characterized in that** the outlet conduit (7) is formed into a collar formed of the material of the cup part (2, 3).

6. A leak detector according to any of claims 4 to 5, **characterized in that** the outlet conduit (7) comprises a collar made of the material of the cup part (2, 3) and a pipe soldered thereto.

7. A method of installing a leak detector around the vertical pipe of a pipeline, **characterized in that**
- a leak detector according to one of claims 1 - 6 is pushed around the vertical pipe of a pipeline, and
- the leak detector is crimped onto the vertical pipe at the location of the sealing member (5).

8. A method according to claim 7, **characterized in that** the sealing member is an O-ring and the leak detector is crimped onto the vertical pipe at the location of the O-ring (5).

9. A method according to claim 8, **characterized in that** the crimping point is dimensioned for an M crimping jaw and the crimping is made by means of an M jaw.

## Patentansprüche

1. Leckdetektor zur Verwendung bei vertikal installierten Rohrleitungen, umfassend einen Schalenteil (1), der um die vertikale Linie einer Rohrleitung herum anzuordnen ist, wobei der Schalenteil (1) einen Zylinder (2) und einen damit verbundenen Reduzierkonus (3) umfasst, wobei der Zylinder (2) des Schalenteils (1) einen ersten oberen Rand (4) aufweist, wobei der sich davon erstreckende Zylinder (2) zusammen mit dem sich von dem anderen Rand des Zylinders (2) erstreckenden Reduzierkonus (3) eine sich zu der Mittellinie des Leckdetektors hin verjüngende Einbuchtung bildet, wobei das dem ersten oberen Rand (4) gegenüberliegende Ende der Einbuchtung mit einem Anschlusskanal (6) bereitgestellt ist, durch den ein vertikales Rohr angeordnet werden kann,
wobei
- der Anschlusskanal (6) mit einer Crimpstelle (5) bereitgestellt ist, die ein Dichtungselement aufweist, und zumindest der Schalenteil (1) und der Anschlusskanal (6) aus Kupfer hergestellt sind, und
- der Leckdetektor einen Auslasskanal (7) umfasst, die sich in einem Abstand von dem Boden des Leckdetektors befindet, wobei der Boden durch den Verbindungspunkt des Reduzierkonus (3) und des durch ihn verlaufenden vertikalen Rohrs gebildet wird, wobei sich der Auslasskanal (7) nach unten in Richtung einer Auslassrichtung von unter Schwerkraft fließendem Wasser erstreckt.

2. Leckdetektor nach Anspruch 1, **dadurch gekennzeichnet, dass** das Dichtungselement ein O-Ring ist.

3. Leckdetektor nach Anspruch 1 oder 2, **dadurch gekennzeichnet, dass** die Crimpstelle für eine M-Crimpbacke dimensioniert ist.

4. Leckdetektor nach einem der Ansprüche 1 bis 3, **dadurch gekennzeichnet, dass** sich der Auslasskanal (7) an dem Schalenteil (2, 3) befindet und sich in einem Abstand von dem Boden des Schalenteils befindet.

5. Leckdetektor nach Anspruch 4, **dadurch gekennzeichnet, dass** der Auslasskanal (7) in einen aus dem Material des Schalenteils (2, 3) gebildeten Kragen eingeformt ist.

6. Leckdetektor nach einem der Ansprüche 4 bis 5, **dadurch gekennzeichnet, dass** der Auslasskanal (7) einen aus dem Material des Schalenteils (2, 3) hergestellten Kragen und ein daran angelötetes Rohr umfasst.

7. Verfahren zum Installieren eines Leckdetektors um das vertikale Rohr einer Rohrleitung herum, **dadurch gekennzeichnet, dass**
- ein Leckdetektor nach einem der Ansprüche 1 bis 6 um das vertikale Rohr einer Rohrleitung herum geschoben wird, und
- der Leckdetektor an der Stelle des Dichtungselements (5) auf das vertikale Rohr gecrimpt wird.

8. Verfahren nach Anspruch 7, **dadurch gekennzeichnet, dass** das Dichtungselement ein O-Ring ist und der Leckdetektor an der Stelle des O-Rings (5) auf das vertikale Rohr gecrimpt wird.

9. Verfahren nach Anspruch 8, **dadurch gekennzeichnet, dass** die Crimpstelle für eine M-Crimpbacke dimensioniert ist und die Vercrimpung mittels einer M-Backe vorgenommen wird.

## Revendications

1. Détecteur de fuite pour une utilisation avec des conduites installées verticalement, comprenant une partie coupelle (1) devant être agencée autour de la ligne verticale d'une conduite, la partie coupelle (1) comprenant un cylindre (2) et un cône de réduction (3) relié à celui-ci, dans lequel le cylindre (2) de la partie coupelle (1) présente un premier bord supérieur (4), le cylindre (2) s'étendant à partir de celui-ci formant une indentation s'effilant vers la ligne centrale du détecteur de fuite conjointement avec le cône de réduction (3) s'étendant à partir de l'autre bord du cylindre (2), l'extrémité de l'indentation à l'opposé du premier bord supérieur (4) étant pourvue d'un conduit de liaison (6) à travers lequel un tuyau vertical peut être agencé,
dans lequel
- le conduit de liaison (6) est pourvu d'un point de sertissage (5) présentant un élément d'étanchéité et au moins la partie coupelle (1) et le conduit de liaison (6) sont faits de cuivre, et
- le détecteur de fuite comprend un conduit de sortie (7) placé à une distance du bas du détecteur de fuite, le bas étant formé par le lieu de jonction du cône de réduction (3) et du tuyau vertical traversant celui-ci, le conduit de sortie (7) s'étendant vers le bas dans une direction de direction de sortie de l'eau s'écoulant sous l'effet de la gravité.

2. Détecteur de fuite selon la revendication 1, **caractérisé en ce que** l'élément d'étanchéité est un joint torique.

3. Détecteur de fuite selon la revendication 1 ou 2, **caractérisé en ce que** le point de sertissage est dimensionné pour une mâchoire de sertissage en M.

4. Détecteur de fuite selon l'une quelconque des revendications 1 à 3, **caractérisé en ce que** le conduit de sortie (7) est placé au niveau de la partie coupelle (2, 3) et placé à une distance du bas de la partie coupelle.

5. Détecteur de fuite selon la revendication 4, **caractérisé en ce que** le conduit de sortie (7) est formé dans un collier formé du matériau de la partie coupelle (2, 3).

6. Détecteur de fuite selon l'une quelconque des revendications 4 à 5, **caractérisé en ce que** le conduit de sortie (7) comprend un collier fait du matériau de la partie coupelle (2, 3) et un tuyau soudé à celui-ci.

7. Procédé d'installation d'un détecteur de fuite autour du tuyau vertical d'une conduite, **caractérisé en ce que**
- un détecteur de fuite selon l'une des revendications 1-6 est poussé autour du tuyau vertical d'une conduite, et
- le détecteur de fuite est serti sur le tuyau vertical à l'emplacement de l'élément d'étanchéité (5).

8. Procédé selon la revendication 7, **caractérisé en ce que** l'élément d'étanchéité est un joint torique et le détecteur de fuite est serti sur le tuyau vertical à l'emplacement du joint torique (5).

9. Procédé selon la revendication 8, **caractérisé en ce que** le point de sertissage est dimensionné pour une mâchoire de sertissage en M et le sertissage est fait au moyen d'une mâchoire en M.
